# EUROPÄISCHE PATENTANMELDUNG

(11) **EP 4 096 075 A1**
(43) Veröffentlichungstag der Anmeldung: **30.11.2022**
(21) Anmeldenummer: 21176063.2
(22) Anmeldetag: 26.05.2021
(51) Int. Cl.: H02K 21/02, H02K 21/24, H02K 7/11, H02K 7/12, H02K 13/06

(54) **AXIALFLUSSMOTOR MIT VARIIERBAREM SPALT**

(71) Anmelder: dormakaba Deutschland GmbH, 58256 Ennepetal (DE)
(72) Erfinder: Vetter, Matthias, 58256 Ennepetal (DE)
(74) Vertreter: Balder IP Law, S.L.

(57) **Zusammenfassung**

Gegenstand der Erfindung ist ein Axialflussmotor (1) und ein Verfahren zum Betrieb desselben, insbesondere zum Antrieb wenigstens eines Flügelelementes einer Tür, eines Tores, eines Fensters, einer Personenvereinzelungseinrichtung und/oder eines Trennwandsystems, mit einer Magneteinheit (10) und mit einer Spuleneinheit (11), wobei die Magneteinheit (10) um eine Rotationsachse (12) drehbar ausgebildet ist, und wobei zwischen der Magneteinheit (10) und der Spuleneinheit (11) ein Spalt (13) ausgebildet ist. Erfindungsgemäß ist eine Betätigungseinheit (14) vorgesehen, mit der der Spalt (13) zwischen der Magneteinheit (10) und der Spuleneinheit (11) variierbar, insbesondere vergrößerbar, ist.

## Beschreibung

Die Erfindung betrifft einen Axialflussmotor, insbesondere zum Antrieb wenigstens eines Flügelelementes einer Tür, eines Tores, eines Fensters, einer Personenvereinzelungseinrichtung und/oder eines Trennwandsystems, mit einer Magneteinheit und mit einer Spuleneinheit, wobei die Magneteinheit um eine Rotationsachse drehbar ausgebildet ist, und wobei zwischen der Magneteinheit und der Spuleneinheit ein Spalt ausgebildet ist.

### STAND DER TECHNIK

Axialflussmotoren weisen einen Aufbau auf, gemäß dem sich in einer Rotationsachse eine Magneteinheit und eine Spuleneinheit gegenüberliegen. Abhängig vom Motortyp können dabei entweder die Spuleneinheit oder die Magneteinheit in Rotation versetzt werden. Die in Rotation versetzbare Einheit ist mit einer Abtriebswelle verbunden, um einen Antrieb bereitzustellen, um beispielsweise ein Flügelelement für eine Tür, für ein Tor, für ein Fenster oder für eine Personenvereinzelungseinrichtung, zumeist bekannt als Drehkreuz, oder für ein Trennwandsystem, bereitzustellen.

Im Ruhezustand weisen Axialflussmotoren ein Rastmoment auf der Abtriebswelle auf, da die Magneteinheiten Permanentmagnete besitzen, die auf die Spulenträger der Spulen, auf denen die Spulen der Spuleneinheit aufgebracht sind, eine Magnetkraft ausüben. Dreht man die Abtriebswelle des Axialflussmotors manuell an, erfährt man einen welligen Drehmomentverlauf, der mitunter dazu führt, die Abtriebswelle nur mit großer Kraft in Drehbewegung versetzen zu können. Der axiale Spalt zwischen der Magneteinheit und der Spuleneinheit wird in der Regel möglichst klein gewählt, da bei einem kleinen Luftspalt die magnetische Flussdichte besonders hoch ist und die Leistung des Axialflussmotors ansteigt. Das Rastmoment zwischen den Permanentmagneten und den Spulenträgern der Spulen der Spuleneinheit ist bei einem kleinen Spalt hingegen auch besonders stark ausgeprägt.

Im Ergebnis ergibt sich bei einem manuellen Antrieb der Abtriebswelle ein über dem Umfang periodisch auftretendes Rastmoment, was insbesondere bei Getriebeverbindungen zwischen dem Flügelelement und dem Axialflussmotor zu erhöhten Bewegungskräften und Momenten führt, um das Flügelelement beispielsweise einer Tür oder eines Trennwandsystems manuell zu betätigen, auch wenn der Axialflussmotor stromlos gesetzt ist.

Aus Komfortgründen und insbesondere aus Sicherheitsgründen sollten jedoch Flügelelemente für Türen, Tore, Fenster und dergleichen auch im stromlosen Zustand eines Antriebs umfassend einen Axialflussmotor manuell mit nur mäßigen Kräften zu bewegen sein, sodass insbesondere Kinder, ältere Menschen und Menschen mit Beeinträchtigungen eine Tür auch dann noch passieren können, wenn der Antrieb und damit der Axialflussmotor nicht bestromt ist. Länderabhängig müssen damit insbesondere technische Vorgaben erfüllt werden, was häufig aufwendige Kupplungssysteme erfordert, um die Wirkverbindung vom Axialflussmotor zum Flügelelement vorübergehend zu trennen und um den Axialflussmotor zu entkoppeln.

### OFFENBARUNG DER ERFINDUNG

Aufgabe der Erfindung ist die Weiterbildung eines Axialflussmotors, der im stromlosen Zustand ein verringertes Rastmoment aufweist. Die Aufgabe der Erfindung ist es dabei auch, ein Verfahren zum Betrieb eines solchen Axialflussmotors zu schaffen und einen Antrieb für eine Tür, ein Tor, ein Fenster, einer Personenvereinzelungseinrichtung und/oder eines Trennwandsystems zu schaffen, der einen solchen Axialflussmotor umfasst.

Diese Aufgabe wird ausgehend von einem Axialflussmotor gemäß dem Oberbegriff des Anspruchs 1, ausgehend von einem Verfahren gemäß dem Oberbegriff des Anspruchs 13 und ausgehend von einem Antrieb gemäß Anspruch 15 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass für den Axialflussmotor eine Betätigungseinheit vorgesehen ist, mit der der Spalt zwischen der Magneteinheit und der Spuleneinheit vorübergehend vergrößerbar ist.

Kerngedanke der Erfindung ist, eine Variation des Rastmoments, insbesondere die Reduktion des Rastmomentes durch eine insbesondere vorübergehende Vergrößerung des Spaltes zwischen den Magneten der Magneteinheit und den Spulen der Spuleneinheit, um im stromlosen Zustand des Axialflussmotors das Rastmoment beim manuellen Antrieb der Abtriebswelle beispielsweise durch Bewegen eines Türflügels oder dergleichen deutlich zu verringern. Dann, wenn der Axialflussmotor stromlos gesetzt wird, insbesondere nach einer vorgebbaren Zeitdauer, kann die Betätigungseinheit aktiviert werden, um den Spalt zwischen den Magneten der Magneteinheit und den Spulen der Spuleneinheit zu vergrößern, sodass das sich einstellende Rastmoment deutlich reduziert wird. Wird der Axialflussmotor wieder aktiviert, kann die Betätigungseinheit den Spalt wieder verringern, um einen normalen Betrieb des Axialflussmotors wieder aufzunehmen.

Mit anderen Worten ist insbesondere zumindest vorübergehend der Spalt vergrößerbar und/oder reduzierbar. Insbesondere kann dabei im aktivierten, insbesondere bestromten, Zustand des Axialflussmotors der Spalt mittels der Betätigungseinheit reduziert werden. Dadurch kann eine größere Leistung des Motors ermöglicht werden. Insbesondere kann dabei im passiven, insbesondere nicht bestromten Zustand des Axialflussmotors der Spalt mittels der Betätigungseinheit vergrößert werden. Dadurch kann ein reduziertes Rastmoment des Axialflussmotors ermöglicht werden. Somit kann beim Einsatz des Motors bei Türanlagen ein leichteres manuelles Betätigen der Türanlage ermöglicht werden.

Insbesondere steht die Betätigungseinheit mit der Magneteinheit in Wechselwirkung, sodass die Magneteinheit mittels einer Aktivierung der Betätigungseinheit relativ zur Spuleneinheit in der Rotationsachse, insbesondere entlang der virtuell verlängerten Rotationsachse, verlagerbar ist. Damit wird eine erste Möglichkeit aufgezeigt, die Magneteinheit in der Axialposition gegenüber der Spuleneinheit zu verändern, indem die Betätigungseinheit mit der Magneteinheit gekoppelt ist.

Zusätzlich oder alternativ kann die Betätigungseinheit mit der Spuleneinheit in Wechselwirkung stehen, sodass die Spuleneinheit mittels einer Aktivierung der Betätigungseinheit relativ zur Magneteinheit in der Rotationsachse, insbesondere entlang der virtuell verlängerten Rotationsachse, verlagerbar ist. Die Wechselwirkung zwischen der Betätigungseinheit und der Spuleneinheit bildet dabei eine alternative Möglichkeit, da auch Motoren bekannt sind, die eine feste Verbindung zwischen der Abtriebswelle und der Magneteinheit aufweisen, sodass die Spuleneinheit ruhend angeordnet wird. Mit Vorteil wird die Betätigungseinheit mit dem Teil des Axialflussmotors in Wechselwirkung gebracht, der nicht den rotierenden Teil bildet, wobei auch dann, wenn die Betätigungseinheit mit dem rotierenden Teil des Axialflussmotors verbunden wird, eine Verlagerung der Magneteinheit oder alternativ der Spuleneinheit auf der Abtriebswelle selbst auch möglich ist.

Um Magnetkräfte zu kompensieren oder um eine definierte Ruheposition der Magneteinheit gegenüber der Spuleneinheit zu gewährleisten, kann eine Federeinheit vorgesehen sein, insbesondere ausgebildet aus einer Vielzahl von Federelementen, die die Magneteinheit in der Rotationsachse gegen die Spuleneinheit vorspannt.

Dabei kann bei einer Aktivierung der Betätigungseinheit die Magneteinheit unter Vergrößerung des Spaltes gegen die Kraft der Federeinheit oder zusammen mit der Kraft der Federeinheit bewegbar sein. Alternativ kann bei einer Deaktivierung der Betätigungseinheit die Magneteinheit unter Vergrößerung des Spaltes mittels der Kraft der Federeinheit bewegbar sein.

Alternativ oder kumulativ kann eine Federeinheit vorgesehen sein, die die Spuleneinheit in der Rotationsachse gegen die Magneteinheit oder entgegen der Magneteinheit vorspannt. Dabei kann bei einer Aktivierung der Betätigungseinheit die Spuleneinheit unter Vergrößerung des Spaltes gegen die Kraft der Federeinheit oder zusammen mit der Kraft der Federeinheit bewegbar sein. Alternativ kann bei einer Deaktivierung der Betätigungseinheit die Spuleneinheit unter Vergrößerung des Spaltes mittels der Kraft der Federeinheit bewegbar sein.

Der Axialflussmotor weist mit Vorteil eine Abtriebswelle auf, wobei die Magneteinheit mit der Abtriebswelle gekoppelt ist und wobei die Betätigungseinheit mit der Abtriebswelle wirkverbunden ist. Dabei kann die Abtriebswelle auch einen hülsenförmigen Teil aufweisen, der über der inneren Abtriebswelle axial beweglich geführt ist, insbesondere um die Magneteinheit axial zu verlagern. Auf gleiche Weise kann die Abtriebswelle auch mit der Spuleneinheit verbunden sein, wobei auch dann die Betätigungseinheit mit der Abtriebswelle wirkverbunden ist, sodass eine axiale Verlagerung wenigstens eines Teils der Abtriebswelle oder einer Hülse auf der Abtriebswelle die axiale Verlagerung der Spuleneinheit auslösen kann.

Mit weiterem Vorteil weist der Axialflussmotor ein Gehäuse auf, wobei bei einer Aktivierung der Betätigungseinheit die Magneteinheit und/oder die Spuleneinheit relativ zum Gehäuse axial verlagerbar ist. Die Betätigungseinheit kann wenigstens an einem Anlenkpunkt in Form eines Gelenkes mit dem Gehäuse verbunden sein.

Die Betätigungseinheit weist vorzugsweise zumindest einen Betätigungsarm auf, der mit der Magneteinheit und/oder mit der Spuleneinheit und/oder mit der Abtriebswelle wirkverbunden ist. Insbesondere kann die Betätigungseinheit mehrere Betätigungsarme aufweisen, wobei jeweils ein Betätigungsarm mit einem der genannten Bauteile wirkverbunden ist.

Weiterhin kann die Betätigungseinheit ein Huberzeugungsmittel aufweisen, mit dem die Magneteinheit und/oder die Spuleneinheit in der Rotationsachse verlagerbar ist. Das Huberzeugungsmittel kann als Spule mit Tauchmagnet, als Motor-Getriebeeinheit beispielsweise mit einem Schneckenradgetriebe oder dergleichen aufweisen. Dabei besteht insbesondere die Möglichkeit, dass das Huberzeugungsmittel auch direkt mit der Magneteinheit oder mit der Spuleneinheit wirkverbunden ist.

Beispielsweise kann das Huberzeugungsmittel auf der Abtriebswelle aufgenommen sein und diese umschließen, und es kann eine Hülse auf der Abtriebswelle aufgenommen sein, die mit dem Huberzeugungsmittel zusammenwirkt, insbesondere wenn die Hülse wiederum den Tauchmagneten einer Tauchankerspule bildet. Selbstverständlich kann das Huberzeugungsmittel auf einfache Weise mit einer Anlenkung mit dem Betätigungsarm wirkverbunden sein. Der Betätigungsarm selbst kann eine Mitnehmergabel umfassen, die die Abtriebswelle oder einen Teil in Verbindung mit der Abtriebswelle axial verlagert.

Die Magneteinheit und/oder die Spuleneinheit können für einen Betriebsmodus des Axialflussmotors einen axialen Arbeitsspalt aufweisen, bei dem die Magneteinheit und/oder die Spuleneinheit einen Abstand zueinander einnehmen, der auch bei inaktiver Betätigungseinheit unveränderlich ist. Insbesondere kann der Motor im Betriebsmodus bestromt sein. Für die Stellung der Betätigungseinheit in der Ruhestellung und in der Betriebsstellung des Axialflussmotors kann dieser eine Arretiervorrichtung aufweisen, sodass zur Aufrechterhaltung des axialen Arbeitsspaltes oder des Ruhespaltes die Betätigungseinheit nicht dauerhaft bestromt werden muss. Bevorzugt ist dabei der Arbeitsspalt kleiner als der Ruhespalt. Auf diese Weise ist der Motor im Betriebsmodus mit kleinerem Spalt leistungsstärker.

Die Magneteinheit und/oder die Spuleneinheit können für einen Ruhemodus des Axialflussmotors einen axialen Ruhespalt aufweisen, bei dem die Magneteinheit und/oder die Spuleneinheit einen Abstand zueinander aufweisen, der auch bei inaktiver Betätigungseinheit bzw. inaktivem Huberzeugungsmittel unveränderlich ist. Insbesondere kann der Motor im Ruhemodus stromlos sein. So kann auch zur Aufrechterhaltung des Ruhemodus eine Arretiervorrichtung vorgesehen sein, insbesondere wenn ein Antrieb aufweisend einen Axialflussmotor, aufgeschaltet ist. Somit ist die Magneteinheit relativ zur Spuleneinheit möglichst rastfrei drehbar, indem der größere axiale Ruhespalt aufrechterhalten bleibt, ohne dass die Betätigungseinheit hierfür eine Energieversorgung benötigt und einen ruhenden Verbraucher darstellt.

Ferner ist es vorteilhafterweise vorgesehen, dass die Betätigungseinheit und/oder das Huberzeugungsmittel so ausgeführt ist oder dass die Betätigungseinheit mit der Magneteinheit und/oder mit der Spuleneinheit so in Wirkverbindung stehen, dass diese im Betriebsmodus für den axialen Arbeitsspalt und im Ruhemodus für den axialen Ruhespalt eine stabile Stellung einnimmt, sodass in beiden Stellungen das Huberzeugungsmittel stromlos gesetzt werden kann. Die Betätigungseinheit und/oder das Huberzeugungsmittel ist insofern so ausgeführt, dass diese eine bistabile Bewegungseinrichtung bilden.

Die Erfindung richtet sich weiterhin auf ein Verfahren zum Betrieb eines Axialflussmotors gemäß obenstehender Darstellung, wobei das Verfahren wenigstens die folgenden Schritte aufweist: Aktivieren der Betätigungseinheit, axiale Verlagerung der Magneteinheit und/oder der Spuleneinheit und Überführen des Axialflussmotors in den Betriebsmodus; Betrieb des Axialflussmotors; Beendigung des Betriebes des Axialflussmotors; Aktivieren der Betätigungseinheit und axiale Verlagerung der Magneteinheit und/oder der Spuleneinheit und Überführen des Axialflussmotors in den Ruhemodus. Der eigentliche Betrieb des Axialflussmotors betrifft dabei den Schritt im Verfahren, der zwischen der Verlagerung der Magneteinheit und/oder der Spuleneinheit unter Verkleinerung des axialen Spaltes erfolgt, sodass sich ein axialer Arbeitsspalt für den Motorbetrieb einstellt, und der rückzuführenden Spuleneinheit oder Magneteinheit, bei der sich der axiale Spalt wieder vergrößert und den Ruhespalt für den ausgeschalteten Motor bildet.

Das Huberzeugungsmittel wird dabei insbesondere nur zum Wechsel zwischen dem Betriebsmodus und dem Ruhemodus des Axialflussmotors bestromt, sodass weder während des Betriebes noch im Ruhemodus des Axialflussmotors das Huberzeugungsmittel Energie aufnimmt und dieses einen Verbraucher darstellt.

Weiterhin ist vorgesehen, dass axiale Verlagerung der Magneteinheit und/oder der Spuleneinheit zueinander entlang einer Rotationsachse erzeugt wird. Die Rotationsachse bildet dabei die Längsachse der Abtriebswelle des Axialflussmotors.

Merkmale und Details, die in Zusammenhang mit dem erfindungsgemäßen Axialflussmotor beschrieben sind, gelten dabei auch in Zusammenhang mit dem erfindungsgemäßen Verfahren und umgekehrt. Dabei können die in der Beschreibung und in den Ansprüchen erwähnten Merkmale jeweils einzeln für sich oder in Kombination erfindungswesentlich sein. Insbesondere werden ein Axialflussmotor und ein Verfahren zum Betrieb eines Axialflussmotors unter Schutz gestellt, und Merkmale, die in Zusammenhang mit dem Axialflussmotor beschrieben sind, gelten insbesondere auch einzeln gesehen für das Verfahren selbst. Die Erfindung richtet sich ferner auf einen Antrieb wenigstens eines Flügelelementes einer Tür, eines Tores, eines Fensters, einer Personenvereinzelungseinrichtung und/oder eines Trennwandsystems und dergleichen, umfassend einen solchen Axialflussmotor. Merkmale und Details, die in Zusammenhang mit dem erfindungsgemäßen Axialflussmotor und dem Verfahren beschrieben sind, gelten dabei auch in Zusammenhang mit dem erfindungsgemäßen Antrieb und umgekehrt.

Gemäß einem weiterführenden Gedanken der Erfindung ist vorgesehen, dass die Betätigungseinheit derart ausgebildet ist, dass diese einen Sensor, beispielsweise einen Hallsensor, einen kapazitiven oder induktiven Abstandssensor, einen Drehgeber oder dergleichen aufweist, sodass diese ein Signal an eine Steuereinheit des Türantriebes bereitstellen kann, mittels dessen die Steuereinheit die Position der Magneteinheit und/oder der Spuleneinheit und/oder der Abtriebswelle in der Rotationsachse, insbesondere entlang der virtuell verlängerten Rotationsachse, und/oder in Bezug auf den Rotationswinkel ermitteln kann. Insbesondere kann dadurch die Größe des Spaltes zwischen der Magneteinheit und der Spuleneinheit und/oder der Rotationswinkel der Magneteinheit und/oder der Abtriebswelle ermittelt werden. Somit wird eine Überwachung des Spaltes und/oder des Rotationswinkels ermöglicht und es wird eine Steuerung oder eine Regelung insbesondere zur Einstellung des Spaltes ermöglicht.

Der Ruhespalt kann beispielsweise ein Maß von 0,1mm bis 5mm, insbesondere 0,2mm bis 4mm, insbesondere 0,3mm bis 3mm, insbesondere 0,4mm bis 2mm, insbesondere 0,5mm bis 1,5mm, insbesondere 0,7 mm - 1,0mm betragen.

Der Arbeitsspalt kann beispielsweise ein Maß von 0,1mm bis 2,0mm, insbesondere 0,2mm bis 1,5mm, insbesondere 0,3mm bis 1,0mm, insbesondere 0,4mm bis 0,8mm, insbesondere 0,5mm bis 0,7mm betragen.

Mit Bezug auf das Maß des Arbeitsspaltes kann dieses für die Einstellung des Ruhespaltes um 10% bis 100%, insbesondere um 20% bis 90%, insbesondere um 30% bis 80%, insbesondere um 40% bis 70%, insbesondere um 50% bis 60% vergrößert werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht eines Axialflussmotors mit einer axial beweglichen Magneteinheit in einem Betriebsmodus, in dem ein Spalt einen kleineren axialen Arbeitsspalt zwischen einer Magneteinheit und einer Spuleneinheit bildet,
- Figur 2: der Axialflussmotor gemäß Figur 1 in einem Ruhemodus, in dem der Spalt zwischen der Magneteinheit und der Spuleneinheit einen größeren axialen Ruhespalt bildet,
- Figur 3: eine schematische Ansicht eines Axialflussmotors mit einer axial beweglichen Spuleneinheit in einem Betriebsmodus,
- Figur 4: der Axialflussmotor gemäß Figur 3 in einem Ruhemodus, in dem der Spalt zwischen der Magneteinheit und der Spuleneinheit größer ist und einen axialen Ruhespalt bildet,
- Figur 5: ein weiteres Ausführungsbeispiel eines Axialflussmotors in einer schematischen Darstellung mit einer axial beweglichen Spuleneinheit, wobei die Betätigungseinheit eine Abtriebswelle des Axialflussmotors anlenkt, wobei die Darstellung den Betriebsmodus des Motors zeigt und
- Figur 6: die Darstellung des Axialflussmotors gemäß Figur 5 mit einem vergrößerten Spalt zwischen Magneteinheit und Spuleneinheit für einen Ruhemodus.

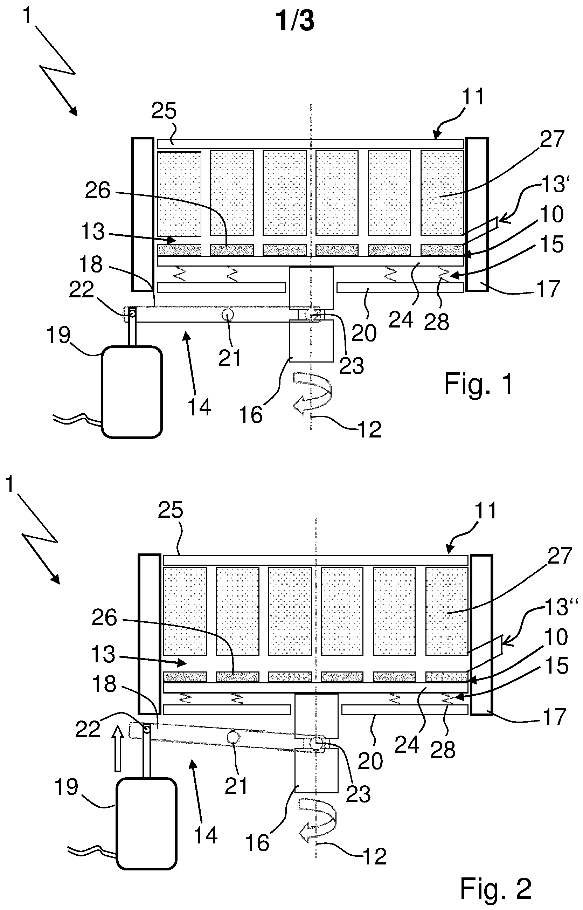

Die Figuren 1 und 2 zeigen in unterschiedlichen Schaltzuständen schematisch ein Ausführungsbeispiel eines Axialflussmotors 1, der beispielsweise Anwendung finden kann zum Antrieb eines Flügelelementes einer Tür, eines Tores, eines Fensters, einer Personenvereinzelungseinrichtung, wie einem Drehkreuz, oder beispielsweise auch zum Antrieb von einzelnen Flügelelementen eines Trennwandsystems. Der Axialflussmotor 1 ist schematisch dargestellt und weist im Wesentlichen eine Magneteinheit 10 und eine Spuleneinheit 11 auf, und beide Einheiten 10, 11 sind um eine Rotationsachse 12 herum ausgestaltet, wobei beispielhaft die Magneteinheit 10 mit einer Abtriebswelle 16 drehstarr verbunden ist. Folglich ist die Spuleneinheit 11 mit einem Gehäuse 17 des Axialflussmotors 1 starr verbunden.

Die Magneteinheit 10 weist eine Vielzahl von Permanentmagneten 26 auf, und die Spuleneinheit 11 weist eine Vielzahl von Spulen 27 auf. Die Permanentmagnete 26 sind auf einem Magnetträger 24 und die Spulen 27 sind auf einem Spulenträger 25 aufgebracht.

Zwischen der Magneteinheit 10 und der Spuleneinheit 11 ist ein Spalt 13 ausgebildet. In Figur 1 ist der Spalt 13 als axialer Arbeitsspalt 13' ausgebildet, und gemäß Figur 2 ist der Spalt 13 als axialer Ruhespalt 13" ausgebildet. Um den Spalt 13 zwischen dem Arbeitsspalt 13' gemäß Figur 1 und dem Ruhespalt 13" gemäß Figur 2 zu verändern, also den Abstand zwischen der Magneteinheit 10 und der Spuleneinheit 11 zu variieren, dient eine erfindungsgemäß ausgeführte Betätigungseinheit 14, die gemäß des dargestellten Ausführungsbeispiels der Figuren 1 und 2 mit der Magneteinheit 10 wirkverbunden ist, sodass diese relativ zur Spuleneinheit 11 und damit auch relativ zum Gehäuse 17 in der axialen Position veränderbar ist. Durch Aktivierung der Betätigungseinheit 14 kann die Magneteinheit 10 entlang der Rotationsachse 12 in der Position verändert werden.

Hierfür weist die Betätigungseinheit 14 einen Betätigungsarm 18 auf, der mit einem Huberzeugungsmittel 19 verbunden ist. Das Huberzeugungsmittel 19 ist beispielsweise als Tauchmagnetspule ausgeführt, und in Figur 1 ist der Tauchmagnet eingezogen und in Figur 2 ausgefahren, wie der Pfeil in Figur 2 darstellt. Dadurch verdreht sich der Betätigungsarm 18 in einem Gelenk 21, wobei der Betätigungsarm 18 eine Mitnehmergabel 23 aufweist, um beispielhaft an der Abtriebswelle 16 anzugreifen, und um die Magneteinheit 10 entlang der Rotationsachse 12 zu verlagern.

Auf der der Mitnehmergabel 23 abgewandten Seite weist der Betätigungsarm 18 eine Anlenkung 22 auf, an der der Anker des Huberzeugungsmittels 19 angreift.

Wird die Magneteinheit 10 mit den Permanentmagneten 26 so entlang der Rotationsachse 12 verlagert, dass sich der Abstand zur Spuleneinheit 11 vergrößert, so geschieht dies unter Kompression der Federelemente 28 der Federeinheit 15, wobei die Federelemente 28 an einer Federplatte 20 abgestützt sind. Dies kann beispielsweise durch Bestromung des Huberzeugungsmittels 19 erfolgen. Befindet sich gemäß Figur 2 der Axialflussmotor 1 im Ruhemodus, sodass der Axialflussmotor 1 stromlos gesetzt wird, so kann in nicht dargestellter Weise eine Arretiervorrichtung dazu dienen, dass auch das Huberzeugungsmittel 19 wieder stromlos gesetzt werden kann, und der Zustand gemäß Figur 2, in dem sich der Axialflussmotor 1 im Ruhemodus befindet, erfolgt unter Aufrechterhaltung der Kompression der Federelemente 28, und in diesem Zustand stellt sich der axiale Ruhespalt 13" ein, sodass sich bei einer manuellen Verdrehung der Abtriebswelle 16, die beispielsweise mit einem Türflügel gekoppelt ist, ein nur geringes Rastmoment ergibt, was deutlich geringer ist als bei einem axialen Arbeitsspalt 13' gemäß Figur 1.

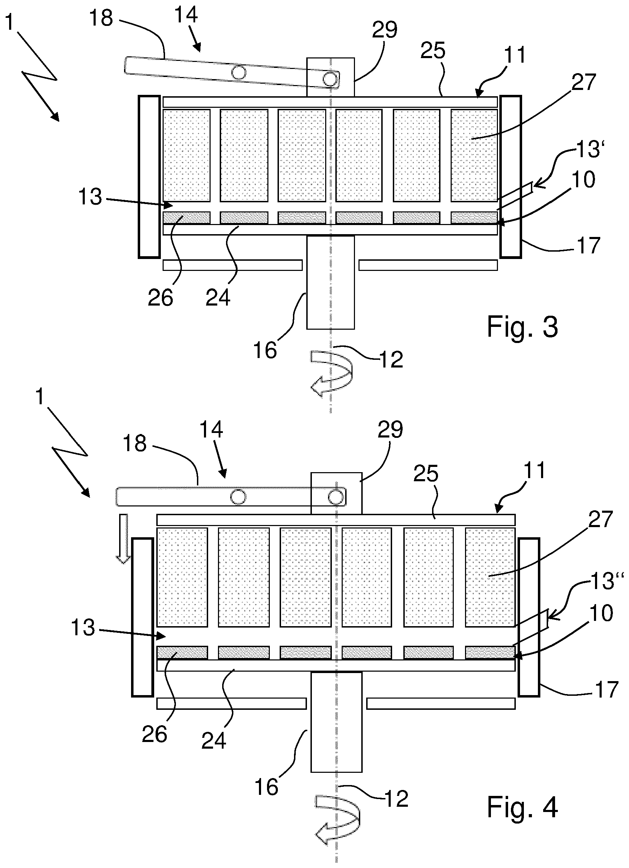

Die Figuren 3 und 4 zeigen ein alternatives Ausführungsbeispiel des Axialflussmotors 1, bei dem die Betätigungseinheit 14 mit der Spuleneinheit 11 über einen Zapfen 29 in Wirkverbindung steht. Wird die Betätigungseinheit 14 mit dem Betätigungsarm 18 auf gleiche Weise wie in Zusammenhang mit den Figuren 1 und 2 beschrieben, aktiviert, so vergrößert sich gemäß diesem Ausführungsbeispiel der Spalt 13 zwischen der Magneteinheit 10 und der Spuleneinheit 11, und der Spalt 13 wechselt von einem axialen Arbeitsspalt 13' gemäß Figur 3 über zu einem axialen Ruhespalt 13" gemäß Figur 4, sodass der Axialflussmotor 1 von einem Betriebsmodus in einen Ruhemodus überführt wird.

Die Magneteinheit 10 mit dem Magnetträger 24 und den auf diesem aufgebrachten Permanentmagneten 26 bleibt relativ zum Gehäuse 17 entlang der Rotationsachse 12 in der Position unverändert, während sich die Spuleneinheit 11 mit dem Spulenträger 25 und den auf diesem aufgebrachten Spulen 27 entlang der Rotationsachse 12 verlagert. Dies geschieht mit Aktivierung der Betätigungseinheit 14 in gezeigter Pfeilrichtung, indem der Betätigungsarm 18 der Betätigungseinheit 14 auf den Zapfen 29 einwirkt, der rückseitig an der Spuleneinheit 11 angeordnet ist und mit der Spuleneinheit 11 die Hubbewegung ausführt.

Im Ergebnis ergibt sich auf gleiche Weise eine Vergrößerung des Spaltes 13 von einem Arbeitsspalt 13' zu einem Ruhespalt 13", sodass der Betriebsmodus gemäß Figur 3 einen Normalbetrieb des Axialflussmotors 1 ermöglicht, und der Ruhemodus gemäß Figur 4 ermöglicht eine vereinfachte manuelle Verdrehung der Abtriebswelle 16, die mit der Magneteinheit 10 umfassend den Magnetträger 24 und die Permanentmagneten 26 verbunden ist, ohne dass größere Rastmomente zwischen den Spulen 27 der Spuleneinheit 11 und den Permanentmagneten 26 der Magneteinheit 10 die Verdrehung der Abtriebswelle 16 erschweren.

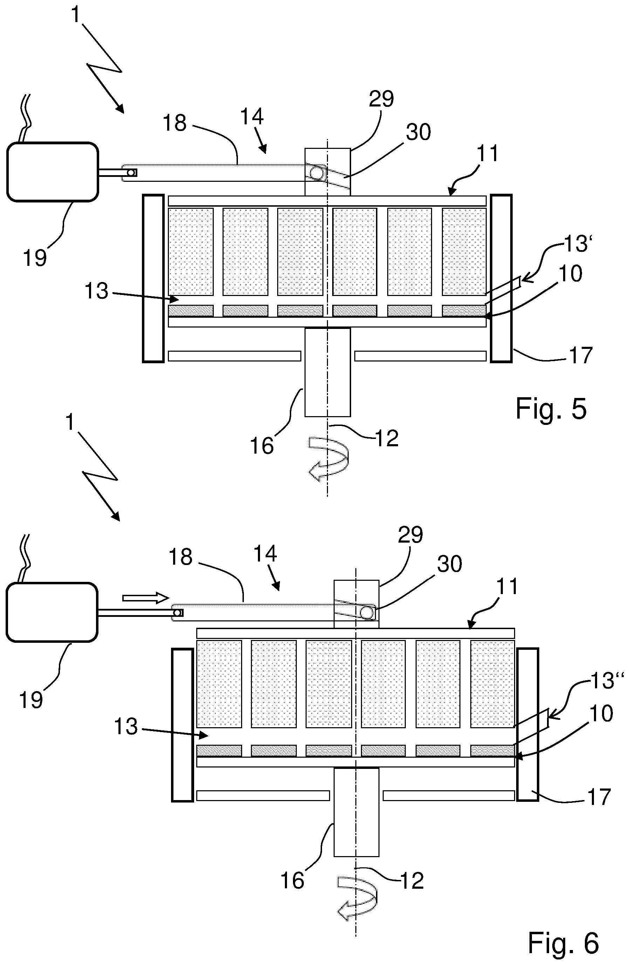

Die Figuren 5 und 6 zeigen eine alternative Ausgestaltung der Betätigungseinheit 14, wobei auch gemäß diesem Ausführungsbeispiel die Spuleneinheit 11 entlang der Rotationsachse 12 verlagerbar ist, während die Magneteinheit 10 relativ zum Gehäuse 17 unverlagert bleibt, und damit eine feste Position zum Gehäuse 17 einnimmt.

Die Betätigungseinheit 14 weist einen Betätigungsarm 18 auf, der sich senkrecht auf die Rotationsachse 12 zulaufend erstreckt und in dieser Erstreckung verlagerbar ist, wobei die Verlagerung wiederum mit dem Huberzeugungsmittel 19 aktiviert werden kann. In einem Zapfen 29, der starr mit der Spuleneinheit 11 verbunden ist, ist eine Kulisse 30 eingebracht, und in der Position gemäß Figur 5 befindet sich der Betätigungsarm 18 in einer ersten Position, die über die schräg verlaufende Kulisse 30 die Spuleneinheit 11 in Richtung zur Magneteinheit 10 bewegt, sodass sich der axiale Arbeitsspalt 13' einstellt. Wird das Huberzeugungsmittel 19 aktiviert, und verlagert sich der Betätigungsarm 18 in Richtung zur Rotationsachse 12 weiter vorwärts, so wird über die Kulisse 30 der Zapfen 29 in der Rotationsachse 12 verlagert, sodass sich auch die Spuleneinheit 11 verlagert. Im Ergebnis vergrößert sich der Spalt 13 zu einem axialen Ruhespalt 13" gemäß Figur 6, die insofern den Ruhemodus des Axialflussmotors 1 repräsentiert.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Axialflussmotor

- 10: Magneteinheit
- 11: Spuleneinheit
- 12: Rotationsachse
- 13: Spalt
- 13': axialer Arbeitsspalt
- 13": axialer Ruhespalt
- 14: Betätigungseinheit
- 15: Federeinheit
- 16: Abtriebswelle
- 17: Gehäuse
- 18: Betätigungsarm
- 19: Huberzeugungsmittel
- 20: Federplatte
- 21: Gelenk
- 22: Anlenkung
- 23: Mitnehmergabel
- 24: Magnetträger
- 25: Spulenträger
- 26: Permanentmagnet
- 27: Spule
- 28: Federelement
- 29: Anformung
- 30: Kulisse

## Patentansprüche

1. Axialflussmotor (1), insbesondere zum Antrieb wenigstens eines Flügelelementes einer Tür, eines Tores, eines Fensters, einer Personenvereinzelungseinrichtung und/oder eines Trennwandsystems, mit einer Magneteinheit (10) und mit einer Spuleneinheit (11), wobei die Magneteinheit (10) um eine Rotationsachse (12) drehbar ausgebildet ist, und wobei zwischen der Magneteinheit (10) und der Spuleneinheit (11) ein Spalt (13) ausgebildet ist,
**dadurch gekennzeichnet,**
**dass** eine Betätigungseinheit (14) vorgesehen ist, mit der der Spalt (13) zwischen der Magneteinheit (10) und der Spuleneinheit (11) variierbar, insbesondere vergrößerbar, ist.

2. Axialflussmotor (1) nach Anspruch 1,
**dadurch gekennzeichnet,**
**dass** die Betätigungseinheit (14) mit der Magneteinheit (10) in Wechselwirkung steht, sodass die Magneteinheit (10) mittels einer Aktivierung der Betätigungseinheit (14) relativ zur Spuleneinheit (11) in der Rotationsachse (12) verlagerbar ist.

3. Axialflussmotor (1) nach Anspruch 1 oder 2,
**dadurch gekennzeichnet,**
**dass** die Betätigungseinheit (14) oder eine weitere Betätigungseinheit mit der Spuleneinheit (11) in Wechselwirkung steht, sodass die Spuleneinheit (11) mittels einer Aktivierung der Betätigungseinheit (14) relativ zur Magneteinheit (10) in der Rotationsachse (12) verlagerbar ist.

4. Axialflussmotor (1) nach einem der Ansprüche 1 bis 3,
**dadurch gekennzeichnet,**
**dass** eine Federeinheit (15) vorgesehen ist, die die Magneteinheit (10) in der Rotationsachse (12) mit oder gegen die Spuleneinheit (11) oder mit oder entgegen der Spuleneinheit (11) vorspannt.

5. Axialflussmotor (1) nach einem der vorgenannten Ansprüche,
**dadurch gekennzeichnet,**
**dass** der Axialflussmotor (1) eine Abtriebswelle (16) aufweist, wobei die Magneteinheit (10) mit der Abtriebswelle (16) verbunden ist, und wobei die Betätigungseinheit (14) mit der Abtriebswelle (16) wirkverbunden ist.

6. Axialflussmotor (1) nach einem der vorgenannten Ansprüche,
**dadurch gekennzeichnet,**
**dass** der Axialflussmotor (1) ein Gehäuse (17) aufweist, wobei bei einer Aktivierung der Betätigungseinheit (14) die Magneteinheit (10) und/oder die Spuleneinheit (11) relativ zum Gehäuse (17) axial verlagerbar ist.

7. Axialflussmotor (1) nach einem der vorgenannten Ansprüche,
**dadurch gekennzeichnet,**
**dass** die Betätigungseinheit (14) einen Betätigungsarm (18) aufweist, der mit der Magneteinheit (10) und/oder mit der Spuleneinheit (11) und/oder mit der Abtriebswelle (16) wirkverbunden ist.

8. Axialflussmotor (1) nach einem der vorgenannten Ansprüche,
**dadurch gekennzeichnet,**
**dass** die Betätigungseinheit (14) ein Huberzeugungsmittel (19) aufweist, mit dem die Magneteinheit (10) und/oder die Spuleneinheit (11) in der Rotationsachse (12) verlagerbar ist.

9. Axialflussmotor (1) nach einem der vorgenannten Ansprüche,
**dadurch gekennzeichnet,**
**dass** das Huberzeugungsmittel (19) mit dem Betätigungsarm (18) wirkverbunden ist.

10. Axialflussmotor (1) nach einem der vorgenannten Ansprüche,
**dadurch gekennzeichnet,**
**dass** die Magneteinheit (10) und/oder die Spuleneinheit (11) für einen Betriebsmodus des Axialflussmotors (1) einen axialen Arbeitsspalt (13') aufweisen, bei dem die Magneteinheit (10) und/oder die Spuleneinheit (11) einen Abstand zueinander einnehmen, der auch bei inaktiver Betätigungseinheit (14) unveränderlich ist.

11. Axialflussmotor (1) nach einem der vorgenannten Ansprüche,
**dadurch gekennzeichnet,**
**dass** die Magneteinheit (10) und/oder die Spuleneinheit (11) für einen Ruhemodus des Axialflussmotors (1) einen axialen Ruhespalt (13") aufweisen, bei dem die Magneteinheit (10) und/oder die Spuleneinheit (11) einen Abstand zueinander aufweisen, der auch bei inaktiver Betätigungseinheit (14) unveränderlich ist.

12. Axialflussmotor (1) nach einem der vorgenannten Ansprüche,
**dadurch gekennzeichnet,**
**dass** die Betätigungseinheit (14) und/oder das Huberzeugungsmittel (19) so ausgeführt ist oder dass die Betätigungseinheit (14) mit der Magneteinheit (10) und/oder mit der Spuleneinheit (11) so in Wirkverbindung stehen, dass diese im Betriebsmodus für den axialen Arbeitsspalt (13') und im Ruhemodus für den axialen Ruhespalt (13") eine stabile Stellung einnimmt, sodass in beiden Stellungen das Huberzeugungsmittel (19) stromlos gesetzt werden kann.

13. Verfahren zum Betrieb eines Axialflussmotors (1) gemäß einem der Ansprüche 1 bis 12, wobei das Verfahren wenigstens die folgenden Schritte aufweist:
- Aktivieren der Betätigungseinheit (14),
- axiale Verlagerung der Magneteinheit (10) und/oder der Spuleneinheit (11) und Überführen des Axialflussmotors (1) in den Betriebsmodus,
- Betrieb des Axialflussmotors (1),
- Beendigung des Betriebes des Axialflussmotors (1),
- Aktivieren der Betätigungseinheit (14) und
- axiale Verlagerung der Magneteinheit (10) und/oder der Spuleneinheit (11) und Überführen des Axialflussmotors (1) in den Ruhemodus.

14. Verfahren nach Anspruch 13,
**dadurch gekennzeichnet,**
**dass** das Huberzeugungsmittel (19) nur zum Wechsel zwischen dem Betriebsmodus und dem Ruhemodus des Axialflussmotors (1) bestromt wird.

15. Antrieb wenigstens eines Flügelelementes einer Tür, eines Tores, eines Fensters, einer Personenvereinzelungseinrichtung und/oder eines Trennwandsystems und dergleichen, mit einem Axialflussmotor, der ausgebildet ist nach einem der Ansprüche 1 bis 12.
